# FASCICULE DE BREVET EUROPEEN

(11) **EP 2 391 775 B1**
(45) Date de publication et mention de la délivrance du brevet: **16.01.2013**
(21) Numéro de dépôt: 10701673.5
(22) Date de dépôt: 28.01.2010
(51) Int. Cl.: E02D 29/02, A01G 9/02, E04C 1/39

(54) **ELEMENT DE CONSTRUCTION ET MUR DE SOUTENEMENT REALISE AVEC DE TELS ELEMENTS**
BAUELEMENT UND SOLCHE ELEMENTE VERWENDENDE STÜTZWAND
CONSTRUCTION ELEMENT AND RETAINING WALL BUILT USING SUCH ELEMENTS

(30) Priorité: 02.02.2009 FR 0950648
(43) Date de publication de la demande: 07.12.2011
(73) Titulaire: Rossi, Dominique, 06100 Nice (FR)
(72) Inventeur: Rossi, Dominique, 06100 Nice (FR)
(74) Mandataire: Hautier, Nicolas
(86) Numéro de dépôt international: PCT/EP2010/050971
(87) Numéro de publication internationale: WO 2010/086352

(56) Documents cités:
- EP-A- 0 322 667
- FR-A- 2 746 126
- FR-A- 2 880 905
- US-A- 5 678 958
- US-A- 5 913 790
- US-A- 6 050 749

## Description

La présente invention concerne un élément de construction, notamment en béton, destiné à réaliser des murs de soutènement.

Un tel élément de construction et des murs de soutènement réalisés par la superposition de plusieurs rangées de tels éléments ont été décrits dans la demande de brevet français FR 2 880 905 au nom du présent déposant.

Selon le mode de réalisation décrit dans cette demande de brevet, chaque élément de construction est destiné à coopérer en superposition avec au moins un élément de construction similaire. Chaque élément de construction comporte une face de dessus, un face de dessous, une face avant et une face arrière et au moins deux alvéoles de section allongée débouchant sur la face de dessus et sur la face de dessous, ces deux alvéoles étant alignées sensiblement parallèles à la face arrière.

Chaque élément de construction comporte sur sa face de dessous au moins une saillie centrale et une nervure en saillie. La saillie centrale est destinée à s'engager dans l'une des alvéoles arrière d'un élément de construction de niveau inférieur. Tandis que la nervure en saillie est destinée à venir en appui le long du bord supérieur de la face arrière d'un élément de construction de niveau inférieur, contribuant au calage des deux éléments dans la direction transversale.

L'emboîtement ainsi créé permet de solidariser les deux éléments et de les décaler l'un par rapport à l'autre dans le sens de la longueur ainsi que dans le sens transversal.

Cependant, le demandeur s'est aperçu que de nombreux éléments de construction étaient cassés lors du stockage et du transport.

Ce type d'élément de construction présente ainsi l'inconvénient d'être instable lors de leur superposition au droit pour le stockage et notamment sous forme de palettes. On entend par superposition au droit que les éléments de construction sont empilés les uns sur les autres sans décalage de sorte à correspondre exactement.

Par conséquent, il existe donc le besoin de proposer un élément de construction permettant un stockage facilité.

Néanmoins, les éléments de construction tels que décrits précédemment selon l'état de la technique permettent une rotation des éléments de construction les uns par rapport aux autres de sorte à former des murs de soutènement ayant une certaine courbure. Par conséquent, il est nécessaire de maintenir cette caractéristique et de permettre la rotation des éléments de construction les uns par rapport aux autres.

L'art antérieur le plus proche est alors présenté dans EP 0322667 A1.

A cet effet, la présente invention propose des éléments de construction du genre précité qui permettent un stockage rapide et efficace tout en permettant de réaliser un mur de soutènement pouvant présenter une certaine courbure.

Suivant l'invention, l'élément de construction destiné à coopérer en superposition avec au moins un élément de construction similaire, chacun des éléments comportant une face de dessus, une face de dessous, une face avant et une face arrière et au moins deux alvéoles de section allongée débouchant sur la face de dessus et sur la face de dessous, ces deux alvéoles étant alignées sensiblement parallèles à la face arrière. L'élément de construction comportant sur sa face de dessous une saillie centrale pouvant s'engager avec jeu dans l'une desdites alvéoles de section allongée d'un élément de construction de niveau inférieur, ou supérieur, et une nervure en saillie qui s'étend parallèlement à la face arrière en prolongement de la paroi intérieure de l'une des alvéoles d'un élément de construction de niveau inférieur ou supérieur.

De manière caractéristique, l'élément de construction selon l'invention comprend au moins un crabot accolée à la paroi intérieure de la face avant sur l'ensemble de sa hauteur et faisant saillie sur la face de dessous.

On entend par crabot un relief tel qu'une saillie, une nervure, un bossage qui est destiné à coopérer avec un autre élément. Le crabot de l'élément selon l'invention est préférentiellement construit dans le même matériau que le reste de l'élément de construction.

Grâce à l'invention, la superposition des éléments de construction lors du stockage ne nécessite plus d'ajout d'élément supplémentaire tel qu'une cale puisque la saillie dépassant de la face de dessous d'un élément vient en appui sur la face de dessus de l'élément de construction inférieur limitant tout basculement. En effet, pour chaque élément de construction, le crabot de l'élément selon l'invention s'étend au-delà du plan de la face de dessous et sur toute la hauteur de la face avant pour s'arrêter au niveau du plan de la face de dessus.

Ainsi, les éléments de construction superposés au droit pour le stockage ne basculent plus en avant du fait de la présence du crabot au niveau de la paroi intérieure de la face avant.

De plus, le crabot de l'élément selon l'invention ne limite pas la construction de murs de soutènement avec une forte courbure. En effet du fait de sa configuration le crabot peut être aisément supprimé de sorte à obtenir un élément de construction permettant une courbure importante.

De manière préférentielle, l'élément de construction selon l'invention comprend en outre au moins deux cavités débouchant sur la face de dessus et sur la face de dessous et disposés au niveau de la face avant. De manière avantageuse, chacune des cavités comprend un crabot tel que décrit. .

Ainsi, lorsque les éléments de construction sont assemblés pour la création d'un mur de soutènement, le crabot de l'élément selon l'invention s'engage avec jeu dans l'une des cavités d'un élément de construction de niveau inférieur et vient en butée entre la paroi intérieure de la face avant et la paroi extérieure des alvéoles arrières de l'élément de construction de niveau inférieur.

Ainsi, le crabot de l'élément selon l'invention présente l'avantage de réduire le jeu longitudinal des éléments de construction les uns par rapport aux autres lors du montage. La mise en position des niveaux du mur de soutènement est facilitée. La vitesse de pose est augmentée. L'efficacité technique et le rendu esthétique du mur de soutènement sont améliorés...

D'autres buts et avantages apparaîtront au cours de la description qui suit d'un mode préféré de réalisation de l'invention qui n'en est cependant pas limitatif.

Selon des variantes préférées de l'invention mais non limitatives de l'invention, l'élément de construction est tel que :
- il comprend au moins deux cavités débouchant sur la face de dessus et de dessous et disposées au niveau de la face avant
- il comprend un crabot dans chacune des cavités
- le crabot est conformé pour se rompre selon une ligne de rupture sensiblement contenue dans le plan de la face de dessous sous l'effet d'un choc
- le crabot est formé par une surépaisseur sur l'ensemble de la hauteur de la face avant
- lorsque deux éléments de construction similaires sont superposés, le crabot de l'élément de construction du niveau supérieur s'engage avec jeu dans l'une des cavités de l'élément de construction de niveau inférieur
- le crabot limite le déplacement longitudinal dudit élément en venant buter contre la paroi intérieure de la face avant et contre la paroi extérieure de l'une des alvéoles arrière d'un élément de construction de niveau inférieur
- le crabot est sensiblement de forme rectangulaire

L'invention concerne également un demi-élément de construction comprenant :
- une face de dessus, une face de dessous, une face avant et une face arrière,
- une alvéole arrière de section allongée sensiblement parallèle à la face arrière et débouchant sur la face de dessus et de dessous
- sur la face de dessous une saillie apte à s'engager dans l'alvéole arrière d'un élément de construction ou demi-élément de construction et une nervure en saillie qui s'étend parallèlement à la face arrière en prolongement de la paroi intérieure de l'alvéole.

Le demi-élément est tel qu'il comprend un crabot accolé à la paroi intérieure de la face avant sur l'ensemble de sa hauteur faisant saillie sur la face de dessous.

De plus, l'invention concerne un mur de soutènement comprenant plusieurs niveaux d'éléments de construction tels que décrits précédemment.

Selon une variante, le mur de soutènement selon l'invention est formé de niveaux d'éléments de construction décalés l'un par rapport à l'autre correspondant à la longueur d'un demi-élément de construction décrit ci-dessus.

Les dessins ci-joints sont donnés à titre d'exemples et ne sont pas limitatifs de l'invention. Ils représentent seulement un mode de réalisation de l'invention et permettront de la comprendre aisément.
La figure 1 représente un élément de construction selon l'invention dont la face de dessous est orientée vers le haut.
La figure 2 représente un l'élément de construction selon la figure 1 vu de dessous.
La figure 3 représente un élément de construction selon une coupe A-A de la figure 2.
La figure 4 représente un demi-élément de construction, selon un premier mode de réalisation de l'invention, vu en perspective, la face de dessous étant orientée vers le haut.
La figure 5 représente un demi-élément de construction selon la figure 4 en vu de dessous.
La figure 6 représente une vue en coupe A-A selon la figure 5.
La figure 7 représente un demi-élément de construction vu de dessous selon un deuxième mode de réalisation de l'invention.
La figure 8 représente un mode de réalisation d'un mur de soutènement présentant deux niveaux de hauteur d'éléments de construction selon l'invention.
Les figures 9a et 9b représentent les éléments de construction lors de leur stockage. La figure 9a représente l'état de la technique, la figure 9b représente les éléments de construction selon l'invention.
Les figures annexées représentent des éléments de construction destinés à coopérer en superposition chacun avec au moins un élément de construction similaire.

Chacun des éléments de construction comporte une face de dessus 1, une face de dessous 2, une face avant 3 et une face arrière 4 et au moins deux alvéoles 5, 6 de section allongée et débouchant sur la face de dessus 1 et sur la face de dessous 2. Ces deux alvéoles 5, 6 sont alignées sensiblement parallèles à la face arrière 4.

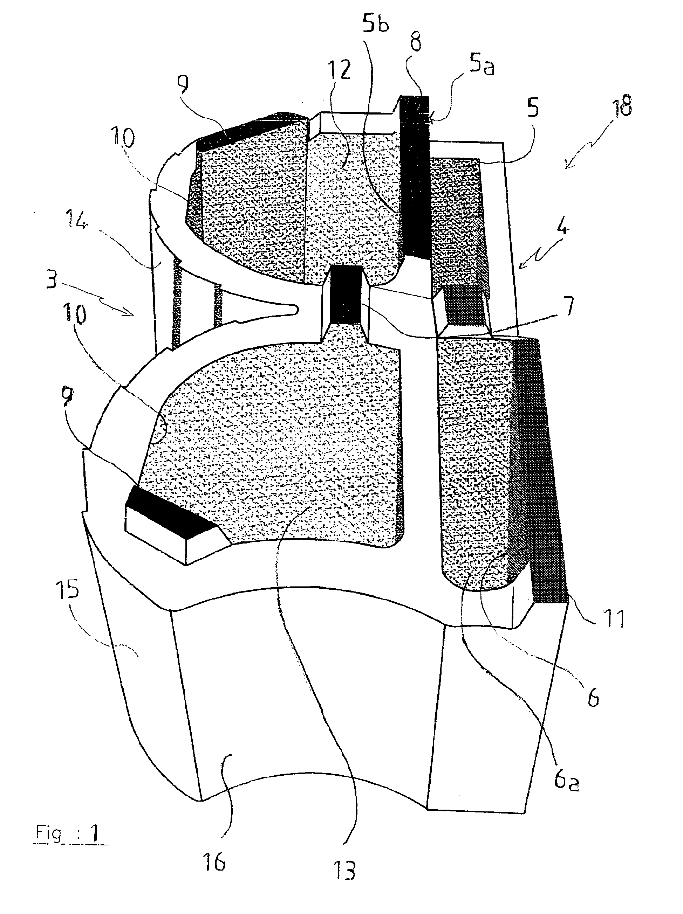

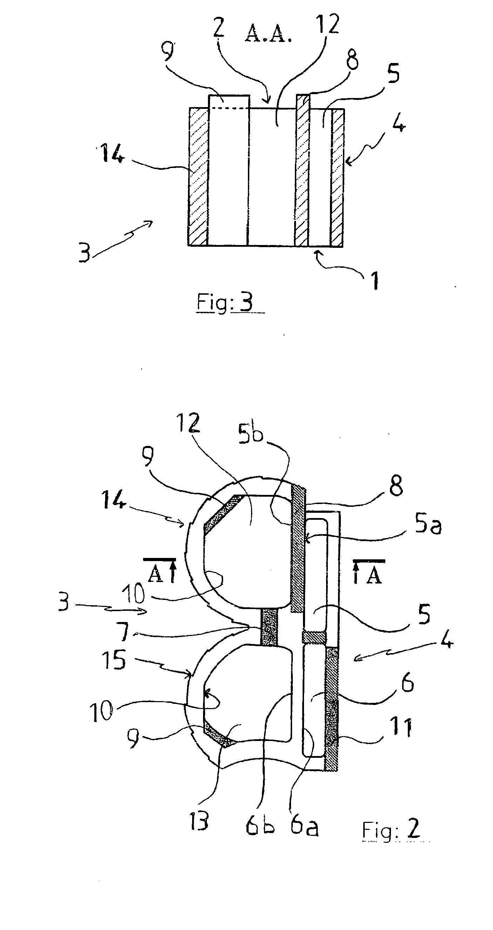

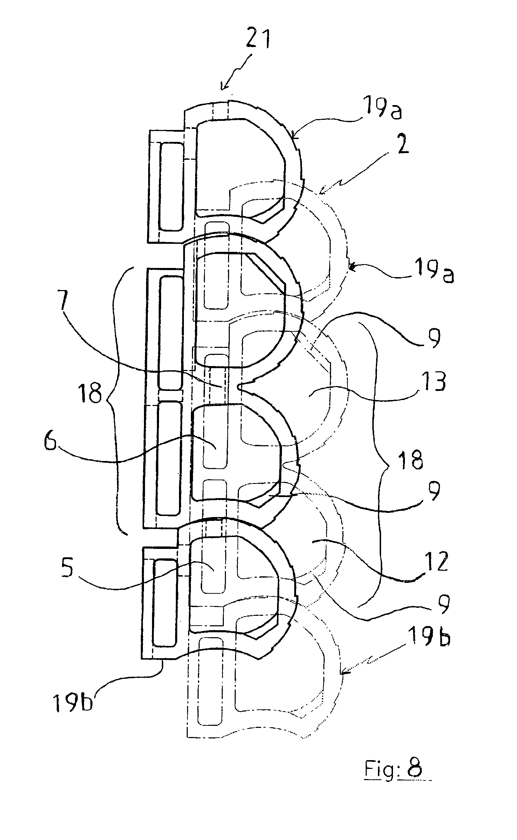

Conformément à l'invention, chaque élément de construction comporte (voir figures 1 à 3) sur sa face de dessous 2 dans une zone centrale de celle-ci une saillie centrale 7, par exemple de section rectangulaire pouvant s'engager avec jeu dans l'une desdites alvéoles 5, 6 de section allongé d'un élément de construction comme représenté en figure 8.

On peut voir sur ces figures que l'élément de construction comprend en outre une première nervure 8 en saillie qui s'étend parallèlement à la face arrière 4 de l'élément en prolongement de la paroi intérieure de l'une des alvéoles 5, 6.

De manière caractéristique, l'élément de construction comprend sur sa face de dessous 2 au moins un crabot 9 accolé à la paroi intérieure 10 de la face avant 3 sur toute sa hauteur.

Ce crabot 9 a plusieurs fonctions. Tout d'abord, du fait qu'il s'étende sur l'ensemble de la hauteur de la paroi intérieure 10 de la face avant 3, il permet de rétablir l'équilibre de l'élément de construction lorsque celui-ci est superposé au droit avec d'autres éléments de construction similaires pour le stockage et le transport par palette. Le crabot 9 présente un relief au-dessus du plan de la face de dessous 2. Selon un mode de réalisation préféré, la hauteur du relief du crabot 9 est sensiblement équivalente à la hauteur des autres reliefs tels que saillies et nervures de la face de dessous 2. Notamment, de la saillie centrale 7 et de la nervure 8 sont préférentiellement d'une hauteur d'environ vingt millimètres.

Ainsi, les reliefs ou surfaces libres tels que la saillie centrale 7, la nervure 8 et le crabot 9 sont définis dans un même plan.

Au niveau de la face de dessus 1, le crabot 9 se situe au niveau du plan de la face de dessus 1. Elle ne s'étend pas au-delà du plan de la face de dessus 1. Ainsi, lorsque deux éléments de construction sont superposés au droit pour être stockés sous forme de palette, le crabot 9 en relief au niveau de la face de dessous 2 vient s'appuyer sur le crabot 9 au niveau du plan de la face de dessus 1 d'un élément de construction de niveau inférieur.

Selon un autre mode de réalisation, les reliefs ou surfaces libres de la face de dessous 2 d'un élément de construction tels que la saillie centrale 7, la nervure 8 et le crabot 9 et la face de dessus 1 d'un deuxième élément de construction superposé définissent des plans complémentaires pour réaliser une superposition stable lorsque les éléments de construction sont superposés au droit.

Ce crabot 9 possède aussi un rôle de calage permettant un positionnement contrôlé des éléments de construction les uns par rapport aux autres lors de la construction d'un mur de soutènement selon l'invention. En effet, selon l'invention, la saillie centrale 7 s'engage dans l'une des alvéoles arrière 5, 6 d'un élément de construction préférentiellement de niveau inférieur limitant ainsi le déplacement longitudinal et transversal de l'élément de construction supérieur par rapport à l'élément de construction inférieur. De plus, la nervure 8 s'étend le long du bord supérieur de la face arrière 4 de l'élément de construction de niveau inférieur, en recouvrant une partie de la longueur de ce bord permettant de stabiliser l'élément de construction de niveau supérieur relativement au bloc de l'élément de construction de niveau inférieur horizontalement. Enfin, le crabot 9 vient compléter le blocage de l'élément de construction de niveau supérieur relativement à l'élément de construction de niveau inférieur en limitant le déplacement longitudinal des éléments de construction.

Notamment, l'élément de construction selon l'invention comprend au moins deux cavités 12, 13 débouchant sur la face de dessus 1 et la face de dessous 2 et disposées au niveau de la face avant 3.

Préférentiellement, chacune des cavités 12, 13 est disposée dans l'alignement des alvéoles arrière 5, 6 au niveau de la face avant 3. Avantageusement, chacune des cavités comporte un crabot 9.

Selon un mode de réalisation préféré, le crabot 9 est formé par une surépaisseur s'étendant sur l'ensemble de la hauteur de la paroi intérieure 10 de la face avant 3. Cette surépaisseur est avantageusement de l'ordre de 10 à 12 millimètres.

Préférentiellement, les différentes parois de l'élément de construction ont une épaisseur de l'ordre de 26 à 28 millimètres.

Cette disposition du crabot 9 par surépaisseur permet de faciliter la cassure du crabot 9 faisant saillie au-delà du plan de la face de dessous 2, de sorte à obtenir un élément de construction selon l'état de la technique permettant la formation de murs de soutènement présentant de fortes courbures.

Ce crabot 9 est facilement cassé à l'aide d'un marteau ou autre outil de masse par un simple coup. Du fait de la formation de la saillie par une surépaisseur sur l'ensemble de la hauteur de la paroi, il n'y a pas de risque de détérioration de l'élément de construction lors de la cassure du crabot 9.

Le crabot 9 se rompt préférentiellement selon une ligne de rupture sensiblement contenue dans le plan de la face de dessous 2. Le plan de la face de dessous 2 contient les extrémités inférieures de la paroi de l'élément de construction 18.

Lors de la superposition d'éléments de construction pour la formation de mur de soutènement tel que représenté en figure 8, le crabot 9 vient en butée contre la paroi intérieure 10 de la face avant 3 et contre la paroi extérieure 5b ou 6b de l'une des alvéoles arrière 5, 6 d'un élément de construction de niveau inférieur.

Comme représenté sur les différentes figures, le crabot 9 préférentiellement formé par une surépaisseur a une forme sensiblement rectangulaire. Préférentiellement le crabot 9 a une longueur comprise entre 50 et 150 millimètres.

Selon une possibilité supplémentaire, la face de dessous 2 de l'élément de construction comprend une deuxième nervure 11 en saillie qui s'étend dans le prolongement d'une partie de la face arrière 4 de l'élément de construction 18.

Chacune des nervures 8, 11 s'étend à partir de l'une des extrémités de l'élément de construction jusqu'à un point situé au-delà du milieu de l'élément.

Sur les différentes figures, les parties représentées en hachuré représentent les saillies et nervures selon l'invention.

Le jeu compris entre la saillie centrale 7 et les parois intérieures 5a, 6a de l'une des alvéoles 5, 6 est tel qu'il permet une certaine rotation entre deux éléments de construction de niveau supérieur et inférieur. Cette rotation est limitée par la butée formée entre la première nervure 8 de l'élément de construction de niveau supérieur et le bord supérieur de la face arrière 4 de l'élément de niveau inférieur.

Les figures 1 à 3 montrent d'autre part que la saillie centrale 7 est formée sur la face de dessous 2 d'une paroi séparant les deux cavités 12, 13 distinctes des alvéoles allongées 5, 6.

Selon une variante préférée de l'invention représentée sur l'ensemble des figures annexées, la face avant 3 est formée par deux parois frontales 14, 15 de section circulaire formant les cavités 12, 13. Préférentiellement, l'extérieur de ces parois frontales 14, 15 est aménagé avec un relief en dents de scie comme représenté en figures 1, 2, 5, 7 et 8.

Avantageusement, pour permettre l'assemblage des éléments de construction les uns par rapport aux autres pour la construction de mur de soutènement, l'élément de construction comprend sur un de ses côtés une zone complémentaire 16 destinée à coopérer avec le côté complémentaire d'un élément de construction similaire. Cette disposition permet aussi la réalisation de mur de soutènement à forte courbure.

La figure 8 montre une partie de mur de soutènement dans laquelle les rangées d'éléments de construction sont décalées l'une par rapport à l'autre d'une longueur qui est réglable selon la longueur de l'alvéole 5, 6 dans laquelle est engagée la partie en saillie 7 et selon la longueur du crabot 9 de chacune des cavités 12, 13.

Cependant, en règle générale, le décalage est d'une demi-longueur d'éléments de construction.

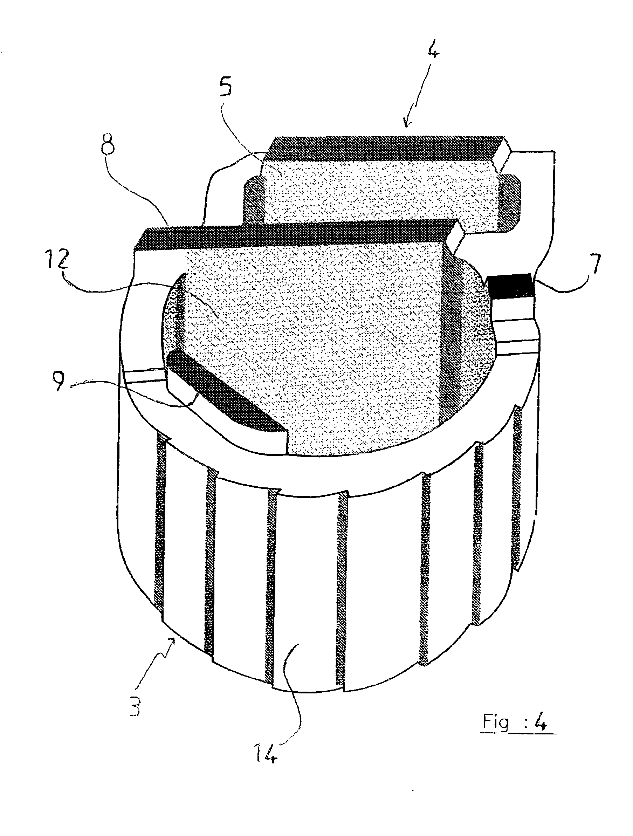

Pour tenir compte de ce décalage, le mur de soutènement peut comporter, aux extrémités de certaines rangées, des demi-éléments de construction 19a, 19b dont la structure correspond sensiblement à la découpe d'un élément de construction tel que décrit précédemment suivant un plan perpendiculaire à sa longueur et passant par le milieu de la saillie centrale 7. De tels demi-éléments de construction 19a, 19b sont représentés aux figures 4 à 7.

Ces éléments ne comportent qu'une alvéole 5 ou 6, qu'une cavité 12 ou 13, la saillie centrale 7 a une longueur égale à la moitié de celle d'un élément de construction 18.

Des nervures 8a et 11a sont également présentes mais leur longueur est plus réduite. Le demi-élément 19a, 19b représenté sur les figures 4, 5, 6 est un demi-élément de construction de droite, adapté pour être placé à l'extrémité droite d'une rangée.

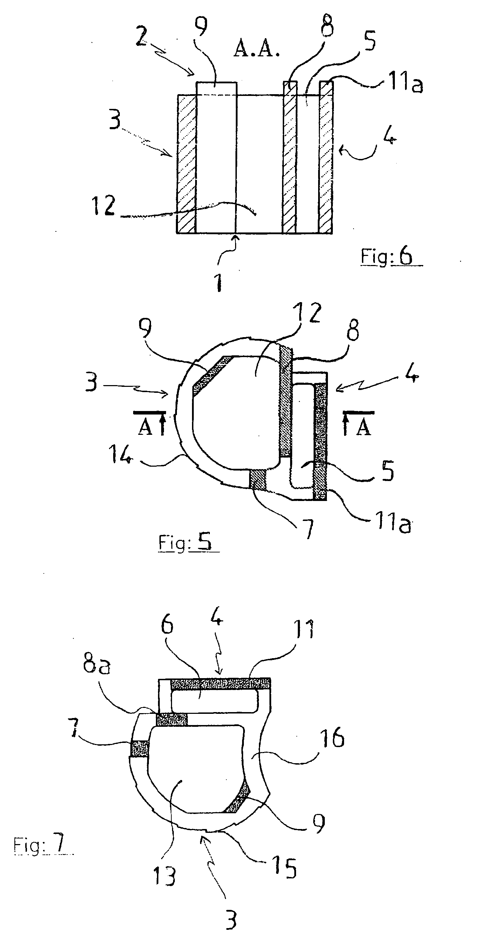

Le demi-élément 19b représenté à la figure 7 est un demi-élément de gauche adapté pour être placé à l'extrémité gauche d'une rangée.

Ces demi-éléménts de construction 19a, 19b comprennent de manière similaire aux éléments de construction un crabot 9 au niveau de la cavité 12 ou 13.

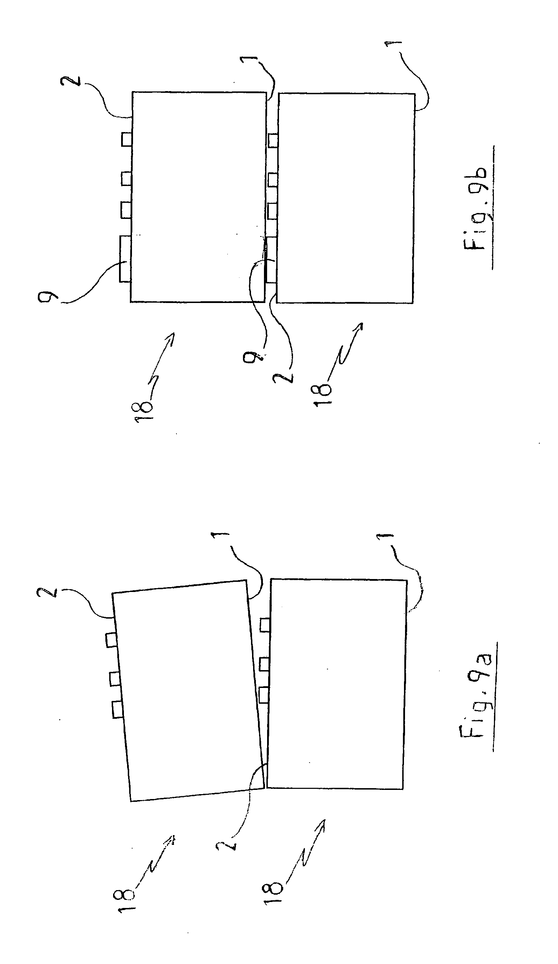

Les figures 9a et 9b illustrent les inconvénients de l'état de la technique et la solution apportée par la présente invention.

Sur la figure 9a, les éléments de construction superposés au droit pour le stockage ne sont pas stables, il y a des risques importants de détérioration et/ou de casse. En effet, les saillies et nervures ne sont présentes que dans les portions arrières des éléments qui ont tendance à basculer en avant lors de leur superposition au droit.

Sur la figure 9b, les éléments de construction selon l'invention superposés au droit sont stables.

Un des avantages des éléments de construction munis du crabot 9 selon l'invention est de permettre une stabilisation des éléments par eux même sans nécessité d'ajout d'élément supplémentaire tel que des cales. En effet, l'ajout de cales, notamment en bois, ne présente pas une sécurité suffisante puisque il y a un risque de mauvais positionnement et donc de basculement de l'ensemble des éléments de construction superposés. De plus, le positionnement de cales est un acte manuel qui augmente considérablement le temps de la palettisation. Enfin, le coût de revient est augmenté du fait de l'utilisation d'un élément supplémentaire et du temps nécessaire à la palettisation.

Enfin, l'élément de construction selon l'invention permet de réduire le coût de l'industrialisation en évitant la mise en place manuelle de cales lors de la fabrication permettant une mise en palette facile et un stockage aisé.

A la mise en oeuvre, l'élément de construction selon l'invention évite le basculement de l'élément sur l'avant et permet un calage rapide et régulier.

### REFERENCES

- 1.: Face de dessus
- 2.: Face de dessous
- 3.: Face avant
- 4.: Face arrière
- 5.: Alvéole arrière
- 5a.: Paroi intérieure
- 5b.: Paroi extérieure
- 6.: Alvéole arrière
- 6a.: Paroi intérieure
- 6b.: Paroi extérieure
- 7.: Saillie centrale
- 8.: Nervure
- 8a.: Nervure
- 9.: Crabot
- 10.: Paroi intérieure face avant
- 11.: Nervure
- 11a.: Nervure
- 12.: Cavité
- 13.: Cavité
- 14.: Paroi frontale de section circulaire
- 15.: Paroi frontale de section circulaire
- 16.: Zone complémentaire
- 17.: Mur
- 18.: Elément de construction
- 19a.: Demi - élément de construction
- 19b.: Demi - élément de construction
- 20.: Niveau inférieur
- 21.: Niveau supérieur
- 22.: Côté

## Revendications

1. Elément de construction (18) destiné à coopérer en superposition avec au moins un élément de construction similaire comprenant :
- une face de dessus (1), une face de dessous (2), une face avant (3) et une face arrière (4) ;
- au moins deux alvéoles arrières (5, 6) de section allongée alignées sensiblement parallèle à la face arrière (4) et débouchant sur la face de dessus (1) et de dessous (2) ;
- sur la face de dessous (2), en partie centrale, une saillie centrale (7) apte à s'engager dans l'une des alvéoles arrière (5, 6) d'un élément de construction (18) similaire ;
- sur la face de dessous (2) une nervure (8) en saillie qui s'étend parallèlement à la face arrière (4) en prolongement de la paroi intérieure (6a) de l'une des alvéoles (5, 6),
tel que
l'élément de construction (18) comprend au moins un crabot (9) accolé à la paroi intérieure (5a) de la face avant (3) et faisant saillie sur la face de dessous (2), **caractérisé par le fait que** le crabot (9) est accolé à la paroi intérieure de la face avant (3) sur l'ensemble de sa hauteur.

2. Elément de construction (18) selon la revendication 1 comprenant au moins deux cavités (12, 13) débouchant sur la face de dessus (1) et de dessous (2) et disposées au niveau de la face avant (3).

3. Elément de construction (18) selon la revendication 2 comprenant un crabot (9) dans chacune des cavités (12, 13).

4. Elément de construction selon l'une quelconque des revendications précédentes dans lequel le crabot (9) est conformé pour se rompre selon une ligne de rupture sensiblement contenue dans le plan de la face de dessous (2) sous l'effet d'un choc.

5. Elément de construction (18) selon l'une quelconque des revendications précédentes dans lequel le crabot est formé par une surépaisseur sur l'ensemble de la hauteur de la face avant (3).

6. Elément de construction (18) selon l'une quelconque des revendications 2 à 5 dans lequel lorsque deux éléments de construction similaires sont superposés, le crabot (9) de l'élément de construction (18) du niveau supérieur s'engage avec jeu dans l'une des cavités (12, 13) de l'élément de construction (18) de niveau inférieur.

7. Elément de construction (18) selon l'une quelconque des revendications précédentes dans lequel le crabot (9) limite le déplacement longitudinal dudit élément en venant buter contre la paroi intérieure (10) de la face avant (3) et contre la paroi extérieure (6b) de l'une des alvéoles arrière (6) d'un élément de construction (18) de niveau inférieur.

8. Elément de construction (18) selon l'une quelconque des revendications précédentes dans lequel le crabot (9) est sensiblement de forme rectangulaire.

9. Demi-élément de construction (19a, 19b) comprenant :
- une face de dessus (1), une face de dessous (2), une face avant (3) et une face arrière (4),
- une alvéole arrière (5, 6) de section allongée sensiblement parallèle à la face arrière (4) et débouchant sur la face de dessus (1) et de dessous (2),
- sur la face de dessous (2) une saillie (7) apte à s'engager dans l'alvéole arrière (5, 6) d'un élément de construction selon l'une quelconque des revendications 1 à 8 ou demi-élément de construction similaire et une nervure (8) en saillie qui s'étend parallèlement à la face arrière en prolongement de la paroi intérieure de l'alvéole,
tel qu'il comprend un crabot (9) accolé à la paroi intérieure de la face avant (3) et faisant saillie sur la face de dessous (2), **caractérisé par le fait que** le crabot (9) est accolé à la paroi
intérieure de la face avant (3) sur l'ensemble de sa hauteur.

10. Mur (17) de soutènement comprenant plusieurs niveaux d'éléments de construction selon l'une des revendications 1 à 9.

11. Mur (17) de soutènement selon la revendication 10 dans lequel les niveaux sont décalés l'un par rapport à l'autre d'une longueur correspondant à un demi-élément de construction (19a, 19b) selon la revendication 9.

## Claims

1. Construction component (18) designed to co-act by superposing on at least one similar construction component and comprising:
- a top face (1), a bottom face (2), a front face (3) and a rear face (4);
- at least two rear cells (5, 6) with elongated section aligned substantially parallel to the rear (4) and open on the top face (1) and the bottom face (2);
- on the bottom face (2), in the central part, a central projection (7) able to engage in one of the rear cells (5, 6) of a similar building component (18);
- on the bottom face (2) a projecting rib (8) which extends parallel to the rear face (4) as an extension from the inner wall (6a) of one of the cells (5, 6),
Such that the construction component (18) comprises at least one lug (9) attached to the inner wall (5a) of the front (3) and projecting from the bottom face (2), **characterised in that** the lug (9) is attached to the inner wall of the front face (3) for its entire height.

2. Construction component (18) according to claim 1 comprising at least two cavities (12, 13) open on the top face (1) and the bottom face (2) and arranged at the front face (3).

3. Construction component (18) according to claim 2 comprising a lug (9) in each of the cavities (12, 13).

4. Construction element according to any one of the preceding claims wherein the lug (9) is designed to fail along a failure line that is substantially in the plane of the bottom face (2) when impacted.

5. Construction component (18) according to any one of the preceding claims wherein the lug is formed by an overthickness for the entire height of the front face (3).

6. Construction component (18) according to any one of the preceding claims 2 to 5 wherein when two construction components are superposed, the lug (9) of the upper level of the construction component (18) engages with clearance in one of the cavities (12, 13) of the lower level construction component (18).

7. Construction component (18) according to any one of the preceding claims wherein the lug (9) limits the longitudinal movement of the said component by abutting against the inner wall (10) of the front face (3) and against the outer wall (6b) of one of the rear cells (6) of a lower level construction component (18).

8. Construction component (18) according to any one of the preceding claims wherein the lug (9) has a substantially rectangular shape.

9. Half-component (19a, 19b) comprising:
- a top face (1), a bottom face (2), a front face (3) and a rear face (4),
- a rear cell (5, 6) of elongated section substantially parallel to the rear face (4) and open on the top face (1) and the bottom face (2),
- on the bottom face (2) is a projection (7) capable of engaging in the rear cell (5, 6) of a construction component according to any one of claims 1 to 8 or a similar half-component and a projecting rib (8) extending parallel to the rear face as an extension of the inner wall of the cell,
Such that it comprises a lug (9) attached to the inner wall of the front face (3) and projecting from the bottom face (2), **characterised in that** the lug (9) is attached to the inner wall of the front face (3) for its entire height.

10. Retaining wall (17) comprising several levels of construction components according to one of the claims 1 to 9.

11. Retaining wall (17) according to the claim 10 wherein the levels are offset relative to one another with a length corresponding to a half construction component (19a, 19b) according to the claim 9.

## Patentansprüche

1. Konstruktionselement (18), bestimmt zum Zusammenwirken durch Übereinanderstellen mit mindestens einem gleichartigen Konstruktionselement, bestehend aus:
■ einer Oberseite (1), einer Unterseite (2), einer Vorderseite (3) und einer Rückseite (4),
■ mit mindestens zwei rückseitigen Ausnehmungen (5, 6) mit länglichem Querschnitt, die bezogen auf die Rückseite (4) annähernd parallel ausgerichtet und auf der Oberseite (1) und der Unterseite (2) offen sind,
■ einer mittleren Überhöhung (7) im mittleren Bereich auf der Unterseite (2), die in eine der rückseitigen Ausnehmungen (5, 6) eines gleichartigen Konstruktionselementes (18) eingreifen kann,
■ einer rippenförmigen Überhöhung (8) auf der Unterseite (2), die parallel zur Rückseite (4) in der Verlängerung der Innenwand (6a) einer der Ausnehmungen (5, 6) verläuft,
so dass das Konstruktionselement (18) mindestens ein formschlüssiges Verbindungselement (9) besitzt, das an der Innenwand (5a) der Vorderseite (3) angesetzt ist und auf der Unterseite (2) hervorsteht,
**gekennzeichnet dadurch, dass** das formschlüssige Verbindungselement (9) an die Innenwand der Vorderseite (3) über deren gesamte Höhe angesetzt ist.

2. Konstruktionselement (18) gemäß Patentanspruch 1 mit mindestens zwei, an der Vorderseite (3) angeordneten Hohlräumen (12, 13), die auf der Oberseite (1) und der Unterseite (2) offen sind.

3. Konstruktionselement (18) gemäß Patentanspruch 2, mit einem formschlüssigen Verbindungselement (9) in jedem der Hohlräume (12, 13).

4. Konstruktionselement gemäß einem der vorstehenden Patentansprüche, bei dem das formschlüssige Verbindungselement (9) so gestaltet ist, das es bei einer schlagartigen Beanspruchung bricht, wobei die Bruchlinie annähernd in der Ebene der Unterseite (2) verläuft.

5. Konstruktionselement (18) gemäß einem der vorstehenden Patentansprüche, bei dem das formschlüssige Verbindungselement aus einer Verdickung über die gesamte Höhe der Vorderseite (3) besteht.

6. Konstruktionselement (18) gemäß Patentanspruch 2 bis 5, bei dem, wenn zwei gleichartige Konstruktionselemente übereinander gestellt werden, das formschlüssige Verbindungselement (9) der oberen Ebene mit Spiel in einen der Hohlräume (12, 13) des Konstruktionselements (18) der unteren Ebene eingreift.

7. Konstruktionselement (18) gemäß einem der vorstehenden Patentansprüche, bei dem das formschlüssige Verbindungselement (9) eine Bewegung in Längsrichtung des genannten Elements dadurch begrenzt, dass es an der Innenwand (10) der Vorderseite (3) und an der Außenwand (6b) einer der rückseitigen Ausnehmungen (6) eines Konstruktionselements (18) der unteren Ebene zum Anschlag kommt.

8. Konstruktionselement (18) gemäß einem der vorstehenden Patentansprüche, bei dem das formschlüssige Verbindungselement (9) eine annähernd rechteckige Form besitzt.

9. Konstruktionselementhälfte (19a, 19b) bestehend aus:
• einer Oberseite (1), einer Unterseite (2), einer Vorderseite (3) und einer Rückseite (4),
• einer Ausnehmung (5, 6) mit länglichem Querschnitt, die annähernd parallel zur Rückseite (4) ausgerichtet und auf der Oberseite (1) und der Unterseite (2) offen ist,
• einer Überhöhung (7) auf der Unterseite (2), die in eine rückseitige Ausnehmung (5, 6) eines Konstruktionselements gemäß einem der Patentansprüche 1 bis 8 oder einer gleichartigen Konstruktionselementhälfte eingreifen kann, sowie einer rippenförmigen Überhöhung (8), die parallel zur Rückseite in der Verlängerung der Innenwand der Ausnehmung verläuft,
so dass sie ein formschlüssiges Verbindungselement (9) besitzt, das an der Innenwand der Vorderseite (3) angesetzt ist und auf Unterseite (2) hervorsteht,
**gekennzeichnet dadurch, dass** das formschlüssige Verbindungselement (9) an die Innenwand der Vorderseite (3) über deren gesamte Höhe angesetzt ist.

10. Stützmauer (17) mit mehreren Ebenen von Konstruktionselementen gemäß einem der Patentansprüche 1 bis 9.

11. Stützmauer (17) gemäß Patentanspruch 10, bei welcher die Ebenen um die Länge einer Konstruktionselementhälfte (19a, 19b) gemäß Patentanspruch 9 gegeneinander versetzt sind.
